# EUROPÄISCHE PATENTANMELDUNG

(11) **EP 1 016 855 A2**
(43) Veröffentlichungstag der Anmeldung: **05.07.2000**
(21) Anmeldenummer: 99124734.7
(22) Anmeldetag: 13.12.1999
(51) Int. Cl.: G01F 1/692

(54) **Verfahren zur Durchflussmessing mit einer Heissfilmanemometeranordnung**

(30) Priorität: 30.12.1998 DE 19860725
(71) Anmelder: ABB PATENT GmbH, 68309 Mannheim (DE)
(72) Erfinder: Blosfeld, Bert, Dipl.-Ing., 22455 Hamburg (DE); Lutz, Michael, Dipl.-Ing., 63533 Mainhausen (DE); Gabel, Andreas, Dipl.-Ing., 65462 Ginsheim 2 (DE); Link, Dieter, 63517 Rodenbach (DE)
(74) Vertreter: Schmidt, Michael, Dipl.-Phys.

(57) **Zusammenfassung**

Die Erfindung betrifft ein Verfahren sowie eine Einrichtung zum Betrieb eines Heißfilmanemometers bei welchem ein vom Meßmedium umströmter Heizwiderstand elektrisch beheizt und zusätzlich die Temperatur gemessen und aus dem Wärmeabgabeverhalten ins Medium dessen Durchflußgröße ermittelt werden. Um bei einem Verfahren sowie einer Einrichtung dieser Art zu erreichen, daß die Regelverfahren untereinander leichter variierbar sind, ist erfindungsgemäß vorgeschlagen, daß sowohl die temperatur- als auch die heizleistungsproportionalen Sensorwerte digitalisiert und in einem Mikroprozessor verarbeitet werden, und daß die heizleistungsbezogenen Stellgrößen widerum D/A-gewandelt und regelnd durchgestellt werden.

## Beschreibung

Die Erfindung betrifft ein Verfahren zur Durchflußmessung mit einer Heißfilmanemometeranordnung, bei weichem über mindestens ein Heizelement und einer weitergehenden Temperaturmessung der Wärmeverlust in Abhängigkeit der Dichte und des Durchflusses eines fließenden Mediums gemessen werden, sowie eine Heißfilmanemometeranordnung selbst gemäß Oberbegriff der Patentansprüche 1 und 4.

Verfahren dieser Art sind als thermische Gasmassendurchflußmeßverfahren nach dem Prinzip des Heißfilmanemometers bekannt. Dieses Meßverfahren beruht dabei darauf, daß einem beheizten oder beheizbaren Körper, beispielsweise einem Heizelement durch das ihn umströmende Gas Wärme entzogen wird. Bei dem besagten umströmenden Gas soll bei bekannter Dichte die Durchflußgeschwindigkeit durch ein Meßrohr ermittelt werden, wobei auch indirekt eine Dichtebestimmung erfolgen kann. Primär steht jedoch die Durchflußermittlung im Vordergrund.

Durch eine Heizregelung wird die entzogene Wärmemenge in Form von elektrischer Energie nachgeführt, so daß die Temperatur des Heizelementes auf konstanter Übertemperatur relativ zur besagten Gastemperatur gehalten werden kann. Dabei ist die notwendig zuzuführende elektrische Leistung ein Maß für den Massendurchfluß bzw. diesem proportional. Ein Verfahren dieser Art wird im allgemeinen als Konstanttemperaturverfahren benannt, weil die besagte Übertemperatur des Heizelementes konstant gehalten wird.

Zusätzlich besteht noch die Möglichkeit, die Heizleistung konstant zu halten und die sich einstellende Temperatur des Heizelementes als Maß für den Massendurchsatz zu nutzen. Das heißt, die Heizleistung wird konstant gehalten und das umströmende Gas transportiert dabei abhängig von Dichte und Strömungsgeschwindigkeit Wärmeenergie ab. Diese schlägt sich durch eine fallende Temperatur nieder, die gemessen und daraus der Massendurchsatz ermittelt wird.

Denkbar ist dabei auch eine Sprungantwortauswertung, also eine Untersuchung der Systemreaktion auf z.B. einen Heizleistungssprung oder eine Körpertemperaturvorgabe, deren Variation ebenfalls massenstromabhängig ist.

Darüber hinaus besteht noch die Möglichkeit, beide Verfahren miteinander zu kombinieren und so zu einer dynamischen Beobachtung der Strömungsverhältnisse zu kommen.

Hierzu werden in der Regel sowohl für das eine als auch für das andere, im übrigen auch das kombinierte Verfahren analoge Systeme verwendet. Dabei werden Wheatston'sche Brückenschaltungen eingesetzt, welche zur Ausregelung nach dem Konstanttemperaturverfahren und Verwendung eines leistungsproportionalen Signals aus der Brückenschaltung als Grundlage für die Massenstrombestimmung dienen.

Im übrigen ist die Durchführung der oben gesagten Verfahren, insbesondere dann, wenn man zu einer dynamischen Messung übergehen will, in dieser analogen Weise wenig effizient. Dabei besteht der Nachteil darin, daß die starre Funktionalität der Wheatston'schen Brückenschaltung keine Veränderung von Regelparametern gestattet.

Der Erfindung liegt somit die Aufgabe zugrunde, ein Verfahren sowie eine Anordnung der gattungsgemäßen Art dahingehend weiterzubilden, daß die Regelverfahren untereinander leichter variierbar sind.

Die gestellte Aufgabe wird bei einem Verfahren der gattungsgemäßen Art erfindungsgemäß durch die kennzeichnenden Merkmale des Patentanspruches 1 gelöst.

Weitere vorteilhafte Ausgestaltungen des erfindungsgemäßen Verfahren sind in den Ansprüchen 2 und 3 angegeben.

Bei einer Einrichtung zum Betrieb eines Heißfilmanemometers gemäß Gattung des Patentanspruches 4 wird die gestellte Aufgabe erfindungsgemäß durch die kennzeichnenden Merkmale des betreffenden Patentanspruches gelöst. Weitere vorteilhafte Ausgestaltungen der erfindungsgemäßen Heißfilmanemometeranordnung sind in den übrigen Ansprüchen angegeben.

Das Verfahren beruht im wesentlichen auf der expliziten Messung der Gas-/Heizelementtemperatur und der Bestimmung der zugehörigen Heizleistung sowie insbesondere der digitalen Regelung und den damit verbundenen Möglichkeiten der Umschaltung zwischen Konstanttemperatur- und Konstantleistungsverfahren bzw. der dynamischen Messung mit der Kombination beider Verfahren. Dabei werden Meßsignale digitalisiert über jedem Signalgeber jeweils einem zugeordneten Analogdigitalwandler. Diese werden sodann einem Mikroprozessor zugeführt, welcher die Signale in beliebiger Korrelation zueinander bewerten kann. Innerhalb des Mikroprozessors können sodann durch die digitale Umsetzung analog ermittelter Signale dieselben auch beliebig nachbearbeitet werden und im übrigen eine beliebige Korrelation der Parameter untereinander erfolgen, was der gesamten Auswertbarkeit eine neue Dimension insbesondere im Hinblick auf Genauigkeit auch im Sinne von Selbstüberwachung gewährleistet.

Zur Ermittlung genauerer Temperaturverhältnisse kann die Temperatur sowohl des Heizelementes als auch des Mediums voneinander unabhängig gemessen werden. Durch bestimmte Meßverfahren oder auch bestimmte Ansteuerungen, beispielsweise der Heizleistung als Funktion der Zeit, können auch thermische Kopplungen zwischen aktueller Heiztemperatur und Meßmedientemperatur eine gezielte Kopplung oder auch Entkopplung der Parameter voneinander vorgenommen werden. Beispielsweise wenn sogenannte Sprungfunktionen vorliegen, kann durch geeignete Wahl des Meßzeitpunktes eine thermische Entkopplung der Systeme untereinander bewirkt werden. So wird beispielsweise in der Regel das Heizelement träger sein, als das Temperaturmeßelement. Liegt eine solche Sprungfunktion vor, so kann durch geeignete Abfrage der aktuellen Signalwerte beispielsweise der Temperaturwert zu einem extrem frühen Zeitpunkt, zu dem der Heizelementetemperaturwert noch nicht reagiert hat, abgefragt werden. Hierdurch kann für diesen Augenblick selektiv das System entkoppelt und die reale Medientemperatur zunächst einmal ermittelt werden. Bei einer späteren Korrelation, nämlich dann, wenn sich die Systeme wieder einander angleichen, kann dann eine erneute Messung stattfinden. Aus den dadurch ermittelbaren Flanken in den Signalverläufen können weitergehende Informationen entnommen werden.

Insgesamt ist dies durch die digitalisierte Verarbeitung der gesamten Parameter möglich.

Die Gastemperatur wird mit einem Platinmeßwiderstand ermittelt. Zur exakten Ermittlung der Heizelementetemperatur sind der Platinmeßwiderstand und das Heizelement auf einem gemeinsamen Keramiksubstrat zusammengefaßt. Die Temperatur selbst wird analog gemessen mit Hilfe des Gastemperaturmeßwiderstandes und nachfolgend digitalisiert. Die Heizleistung wird über den Heizstrom sowie den Spannungsabfall über dem Heizwiderstand ermittelt, nachdem die besagten so analog abgegriffenen Werte vor der Bewertung digitalisiert werden. Alle Werte werden in einem Prozessor zusammengefaßt und die Regelung als solches digital durchgeführt.

Dabei kann entweder das Konstanttemperaturverfahren oder das Konstantleistungsverfahren angewendet werden. Das Konstanttemperaturverfahren bedient sich einer konstanten Ubertemperatur, welche eingestellt und hieraus die resultierende Heizleistung als durchflußabhängige Größe herangezogen wird. Beim Konstantleistungsverfahren wird die Heizleistung konstant gehalten und die Heizelementtemperatur als Maß für den Massendurchfluß herangezogen.

Eine weitere Variante kann darin bestehen, das Konstanttemperaturverfahren und das Konstantleistungsverfahren zu einem dynamischen Meßverfahren zu kombinieren. Dabei wird entweder die Heizleistung oder die Ubertemperatur variiert und dynamische Änderungen als Maß für die Bewertung des Durchflusses herangezogen. Solche dynamischen Änderungen können sein Sprungantworten, Zeitkonstanten des Temperaturverlaufs oder die Stellgröße der Heizleistungen.

Die Erfindung beruht daher im wesentlichen auf der digitalisierten Meßwertwandlung und einer entsprechend nachfolgenden digitalisierten Verarbeitung in Verbindung mit der nunmehr verbesserten Bearbeitbarkeit und Führung der oben genannten Verfahren. Dabei kann ein gezielter variierender Eingriff in die Regelparameter vorgenommen werden.

Weitere Vorteile bestehen darin, daß die Heizelementtemperatur bei zu hoher Gastemperatur begrenzt werden kann. Diese Maßnahme führt zu einer Standzeitenverbesserung der gesamten Anordnungen.

Fernerhin kann die Kompensation von Nichtlinearitäten von zum Beispiel Platinmeßwiderständen über Kennlinien oder mathematische Funktionen kompensiert werden und ermöglichen die Bestimmung genauer Heizleistungen als Grundlage hochgenauer Massenstrombestimmungen. Dies ist möglich durch die Einbeziehung des Mikroprozessors und die entsprechende digitale Bearbeitung der Signale. Der digitale Regler kann darüber hinaus adaptiv ausgeführt werden, was bedeutet, das derselbe selbstlernend ist. Dies führt auch bei unterschiedlichen Streckenverhalten aufgrund unterschiedlicher Massendurchsätze zu einer optimalen Meßdynamik.

Die Signalfilterkonstanten können ebenfalls adaptiv ausgeführt werden und führen so zu optimierten Signaldarstellungen. Über die mikroprozessorgestützte sogenannte Beobachtersystemauslegung kann ein Streckenmodell simuliert werden, das die Ansprechzeit optimiert, im Sinne eines prädiktiven Modells. Der Vergleich der Platinmeßwiderstände untereinander ermöglicht Widerstandsdrifterkennung und damit die Möglichkeit zur Einleitung von geeigneten Maßnahmen.

Die Erfindung ist in der Zeichnung dargestellt und nachfolgend näher beschrieben.

Es zeigt:
- Fig. 1:: Prinzipieller elektronischer Aufbau.
- Fig. 2:: Keramikträger mit Heizwiderstand und Temperaturmeßwiderstand auf einer Seite.
- Fig. 3:: Keramikträger mit Heizwiderstand und Temperaturmeßwiderstand auf den zwei entgegengesetzten Seiten des Keramikträgers.

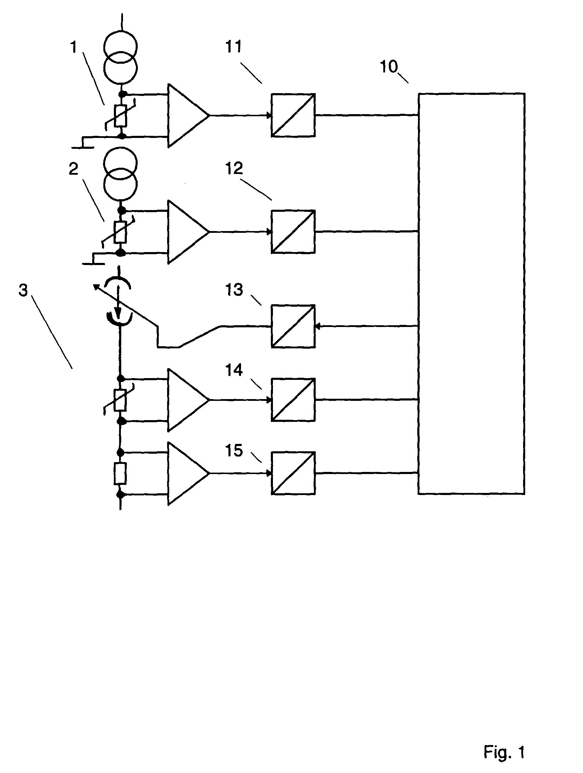

Figur 1 zeigt den prinzipiellen elektronischen Aufbau mit der Darstellung der einzelnen Meßpfade. Dabei wird über einen Temperaturfühler 1 die reine Medientemperatur gemessen, einem Verstärker zugeführt und sodann einem AD-Wandler 11, der den besagten Wert digitalisiert an den Mikroprozessor 10 weitergibt. Des weiteren wird die Heizelementtemperatur durch einen entsprechenden Fühler 2 gemessen, verstärkt, AD-gewandelt und ebenfalls dem Mikroprozessor 10 zugeführt. Darüber hinaus erfolgt auch eine Ermittlung der Heizspannung und des Heizstromes über das Heizelement 3 sowie ein entsprechender Abgleich, wobei alle diese Komponenten ebenfalls AD-gewandelt und dem Mikroprozessor 10 zugeführt werden. Der Mikroprozessor 10 als solches wiederum erzeugt ein digitales Stellsignal, welches wieder analog umgewandelt und daraus ein entsprechendes Stellsignal für das Heizelement 3 geliefert wird.

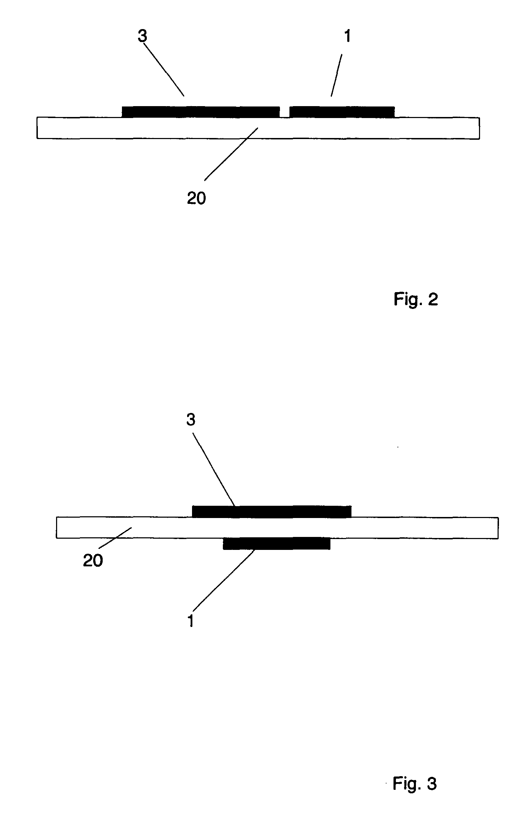

Figur 2 zeigt die Ausgestaltungsmöglichkeit, bei der der Temperaturmeßwiderstand 1 und der Heizwiderstand 3 auf einer gemeinsamen Seite des Trägers 20 angeordnet sind. Durch die örtliche Nähe von Temperaturmeßwiderstand 1 und Heizwiderstand 3 ist eine gute thermische Kopplung gegeben. Eine weitere Möglichkeit der guten thermischen Ankopplung ist in Figur 3 angegeben. Hierbei befinden sich Thermowiderstand 1 und Heizwiderstand 3 auf gegenüberliegenden Seiten eines gemeinsamen Keramiksubstrates bzw Trägers 20. Ist das Substrat entsprechend dünn so ist auch eine gute thermische Kopplung gegeben.

In verfahrensgemäßer Hinsicht ist durch den Einsatz des Mikroprozessors 10 auch die Möglichkeit gegeben, dynamische Regelkomponenten in das Verfahren mit einzubringen. Dies kann, wie oben bereits beschrieben, darin bestehen, daß die beiden Parameter wie Thermospannung und Heizleistung zu unterschiedlichen Zeiten erfaßt werden. Dies wird in so kurzen Zeitabständen oder bei Veränderung der Durchflußsituation auch innerhalb der Flanke der besagten Parameter in zeitlich getrennten Phasen zu ermittelt. Dies ermöglicht dann die Ermittlung dynamischer Bewertungsparameter, die in den Flankenfunktionen verborgen sind.

## Patentansprüche

1. Verfahren zum Betrieb eines Heißfilmanemometers bei welchem ein vom Meßmedium umströmter Heizwiderstand elektrisch beheizt und zusätzlich die Temperatur gemessen und aus dem Wärmeabgabeverhalten ins Medium dessen Durchflußgröße ermittelt werden,
dadurch gekennzeichnet,
daß sowohl die temperatur- als auch die heizleistungsproportionalen Sensorwerte digitalisiert und in einem Mikroprozessor verarbeitet werden, und daß die heizleistungsbezogenen Stellgrößen widerum D/A-gewandelt und regelnd durchgestellt werden.

2. Verfahren nach Anspruch 1,
dadurch gekennzeichnet,
daß die heizleistungs- und temperaturproportionalen Sensorwerte derart korreliert werden, daß gemäß Konstanttemperaturverfahren der Heizwiderstand bei gegebener strömungsabhängiger Wärmeabgabe auf konstanter Temperatur geregelt und die hierzu notwendige Energie als ein Maß für die Strömung herangezogen wird.

3. Verfahren nach Anspruch 1,
dadurch gekennzeichnet,
daß die heizleistungs- und temperaturproportionalen Sensorwerte derart korreliert werden, daß gemäß Konstantleistungsverfahren der Heizwiderstand bei gegebener strömungsabhängiger Wärmeabgabe mit konstanter Heizleistung beaufschlagt wird, und die Temperatur gemessen und als ein Maß für die Strömung herangezogen wird.

4. Einrichtung zum Betrieb eines Heißfilmanemometers, mit einem Heizelement in Form eines Widerstandselementes, mindestens einem Temperatursensor, sowie mit elektronischen Mitteln zur Erfassung der Sensorwerte und Ermittlung des Massendurchflusses,
dadurch gekennzeichnet,
daß der Temperatursensor (1) und das heizbare Widerstandselement (3) auf einem gemeinsamen Träger (20) angeordnet sind.

5. Einrichtung nach Anspruch 4,
dadurch gekennzeichnet,
daß der Temperatursensor (1) und das heizbare Widerstandselement (3) auf einer Seite des Trägers (20) angeordnet sind.

6. Einrichtung nach Anspruch 4,
dadurch gekennzeichnet,
daß der Temperatursensor (1) und das beheizbare Widerstandselement (3) auf unterschiedlichen Seiten des Trägers (20) angeordnet sind.

7. Einrichtung nach Anspruch 5 oder 6,
dadurch gekennzeichnet,
daß der Temperatursensor (1) und das beheizbare Widerstandselement (3) in unmittelbarer Nähe zueinander angeordnet sind.

8. Einrichtung nach Anspruch 7,
dadurch gekennzeichnet,
daß der Träger (20) unter Gewährung einer kleinen Wärmekapazität und eines guten Wärmedurchganges mit kurzer Reaktionszeit dünn ausgeführt ist.
